# EUROPEAN PATENT SPECIFICATION

(11) **EP 2 144 014 B1**
(45) Date of publication and mention of the grant of the patent: **15.08.2012**
(21) Application number: 08748417.6
(22) Date of filing: 28.04.2008
(51) Int. Cl.: F24F 11/00

(54) **AIR CONDITIONER WITH OPERATION ACCORDING TO A USER-DEFINED CURVE AND THE CONTROL METHOD THEREOF**
KLIMAANLAGE MIT BEDIENUNG NACH BENUTZERDEFINIERTER KURVE UND STEUERVERFAHREN DAFÜR
CONDITIONNEUR D'AIR FONCTIONNANT SELON UNE COURBE DÉFINIE PAR L'UTILISATEUR ET SON PROCÉDÉ DE COMMANDE

(30) Priority: 28.04.2007 CN 200710097263
(43) Date of publication of application: 13.01.2010
(73) Proprietor: Gree Electric Appliances, Inc.of Zhuhai, Guangdong 519070 (CN)
(72) Inventor: MA, Yingjiang, Zhuhai, Guangdong 519070 (CN); ZHANG, Youlin, Zhuhai, Guangdong 519070 (CN); LIANG, Bo, Zhuhai, Guangdong 519070 (CN); MI, Xuetao, Zhuhai, Guangdong 519070 (CN); CAO, Xuan, Zhuhai, Guangdong 519070 (CN)
(74) Representative: Carpintero Lopez, Francisco
(86) International application number: PCT/CN2008/000858
(87) International publication number: WO 2008/134931

(56) References cited:
- EP-A1- 1 811 242
- CN-A- 1 469 085
- CN-A- 1 699 864
- CN-A- 101 033 882
- CN-Y- 2 663 859
- JP-A- 2000 146 271
- JP-A- 2006 162 168
- US-A1- 2005 115 258
- US-A1- 2008 041 075

## Description

### FIELD OF THE INVENTION

The present invention relates to an air conditioner and the control method thereof, more particularly, to an air conditioner operating according to a user-defined curve and the control method thereof, a user is able to realize the settings of the user-defined curve by means of a remote controller according to personal preference and surrounding environment.

### BACKGROUND OF THE INVENTION

Along with the improvement of people's living standard, there is an increasing demand for air conditioners to be more comfortable. The relation between changes of the room temperature during sleep and the sleep quality varies greatly with respect to different ages, genders and individuals, etc. Generally, body temperature of a human being in sleep status changes continually as the sleep time goes by: the human being has normal body temperature as usual at the stage of beginning sleep, then the body temperature decreases as the sleep time goes by and increases gradually at the stage of nearly waking up under the automatic regulation of biological clock.

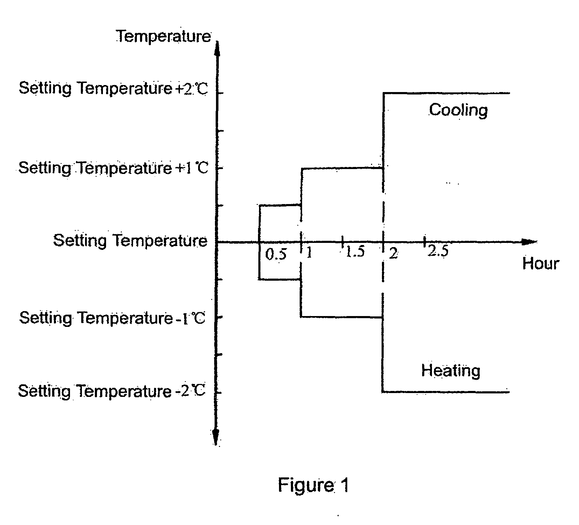

In order to prevent the lowering of body temperature caused by supercooling during sleep, more attentions should be paid to the operation of the air conditioner during sleep than to usual operation. Air conditioner sleep mode refers to the operation mode of air conditioner when the user is in sleep state (see for example patent document US-A-2005/115 258), air conditioner manufacturers have to set the sleep operation mode of air conditioner based on the mass data obtained from comprehensive statistics. For example, Figure 1 shows the change curve of temperature as a function of time of a prior art air conditioner with common sleep function. As illustrated in Figure 1, in cooling mode, the setting temperature will be automatically increased by 0.5 degree after the sleep mode is started for half an hour, and then increased by 1 degree after one hour, the setting temperature will be increased by 2 degrees compared with the primary temperature after two hours which will be held until the sleep mode is cancelled. For another example, in heating mode, the setting temperature will be automatically decreased by 0.5 degree after the sleep mode is started for half an hour, and then decreased by 1 degree after one hour, the setting temperature will be decreased by 2 degrees compared with the primary temperature after two hours which will be held until the sleep mode is cancelled.

Normally, this kind of sleep function can not be changed by users which meets some people's needs but may not be suitable for other people at all, as a result, the sleep function is just an auxiliary function which may not be used at all by common users. In addition, in this kind of sleep mode, the air conditioner functions just as a cold source (or hot source), which is far away from making people feel comfortable.

### SUMMARY OF THE INVENTION

The present invention aims at providing an air conditioner operating according to a user-defined curve and the control method thereof, so that the air conditioner user is able to adjust the temperature curve more easily according to personal sleep habit, and the air conditioner sleep function is more close to the demands of the most majority users. More particularly, according to personal preference and geographical environment, the user is able to set the user-defined curve at any time by means of a remote controller so as to produce a comfortable sleeping environment.

According to one aspect of the present invention, an air conditioner operating according to a user-defined curve is provided, said air conditioner comprises a main unit, **characterized in that**, said main unit comprising: a receiving unit of user-defined curve for receiving the data of the user-defined curve set by the user, the user-defined curve defines air conditioner temperatures demanded by the user as a function of time; and a control unit connected to the receiving unit of user-defined curve for controlling the air conditioner temperatures at different times according to the user-defined curve.

Preferably, the control unit is an air conditioner MCU control chip, the data of the user-defined curve are stored in a built-in RAM of the air conditioner MCU control chip, and the control unit automatically calls the data of the user-defined curve according to the user's settings.

Preferably, the air conditioner further comprises a remote controller, and the user can set the user-defined curve by means of the remote controller. The remote controller comprises: a keyboard for inputting temperature and time data of the user-defined curve; a main chip of remote controller for receiving the temperature and time data inputted by the user to generate the data of the user-defined curve and for transmitting the data of the user-defined curve respectively to a memory chip, a display unit and a transmitting unit; a memory chip for storing the data of the user-defined curve; a display unit for displaying the data inputted by the user and displaying the user-defined curve based on the data of the user-defined curve transmitted by the main chip of remote controller; and a transmitting unit for transmitting the data of the user-defined curve transmitted from the main chip of remote controller to the receiving unit of user-defined curve of the main unit.

According to another aspect of the present invention, a method of controlling an air conditioner to operate according to a user-defined curve is provided, the method comprises the following steps: the user-defined curve is set by use of the keyboard on the remote controller; when the settings are done, the data of the set user-defined curve are stored by the remote controller in the built-in memory chip of the remote controller; the data of the user-defined curve are transmitted in coding format to an infrared signal receiving unit of the main unit of air conditioner by an infrared signal transmitting unit of remote controller; the data of the user-defined curve are stored in a built-in RAM of a MCU control chip of the main unit of air conditioner by the infrared signal receiving unit of the main unit of air conditioner, then predetermined operation parameters are set during the corresponding period of time by the MCU control chip according to the data of the user-defined curve in the RAM, and the main unit of air conditioner is controlled to operate accordingly by said operation parameters.

Optionally, the user-defined curve is a user-defined sleep curve, for the remote controller having staged timing function, the process of setting user-defined sleep curve further comprises the following steps: the user enters the user-defined setting status; then the user sets a temperature value, the remote controller will automatically increase a certain time interval, at the same time, the remote controller will automatically maintain the setting temperature; if there is no need for the user to change the setting temperature, he can directly confirm, then the remote controller will automatically increase a certain time interval for one more time, if the user changes the setting temperature, he can adjust the setting temperature to the demanded value, the remote controller will automatically increase a certain time interval; keep on doing so until completing the temperature settings for the whole period of sleep time thereby a user-defined sleep curve is done.

Optionally, the user-defined curve is a user-defined temperature-time curve, for the remote controller having time timing function, the process of setting user-defined temperature-time curve further comprises the following steps: the user enters the user-defined temperature setting mode to activate the user-defined curve setting status; set the starting time and operation time for entering user-defined curve operation status, set the setting temperature corresponding to the operation time so that the setting of one temperature point is done; by repeatedly setting a plurality of temperature points, said user-defined temperature-time curve is set.

The present invention is not limited to the above-mentioned sleep function settings, the user-defined curve may be a user-defined mode curve, for the remote controller having clock counting function, the process of setting user-defined mode curve further comprises the following steps: the user enters the user-defined setting status to set the starting time and operation time of the user-defined mode; set the operation function parameters of air conditioner corresponding to each operation time, and said function parameters include on-off, mode, temperature and/or wind speed.

According to the present invention, the air conditioner user is able to set temperature-time curve at will according to personal sleep habit, which is convenient and flexible; the user will feel more comfortable when using the air conditioner, it is a breakthrough in comfortableness and personalization.

### BRIEF DESCRIPTION OF THE DRAWINGS

Figure 1 shows the change curve of temperature as a function of time of a prior art air conditioner with common sleep function;
Figure 2 is a modular diagram of the air conditioner with function of user-defined curve according to the present invention;
Figure 3 shows the user-defined sleep curve according to the first embodiment of the method of controlling the air conditioner to operate according to a user-defined curve of the present invention, the user is able to change the user-defined sleep curve at will, wherein the longitudinal axis represents setting temperature and horizontal axis represents time, one hour is added automatically each time the user makes a change;
Figure 4 shows the user-defined curve of temperature as a function of time according to the second embodiment of the method of controlling the air conditioner to operate according to a user-defined curve of the present invention, the user is able to change the user-defined temperature-time curve at will, wherein the longitudinal axis represents setting temperature and the time represented by the horizontal axis can be set at will.

### DETAILED DESCRIPTION OF THE PREFERRED EMBODIMENTS

The preferred embodiments of the present invention will be described in details with reference to the attached drawings.

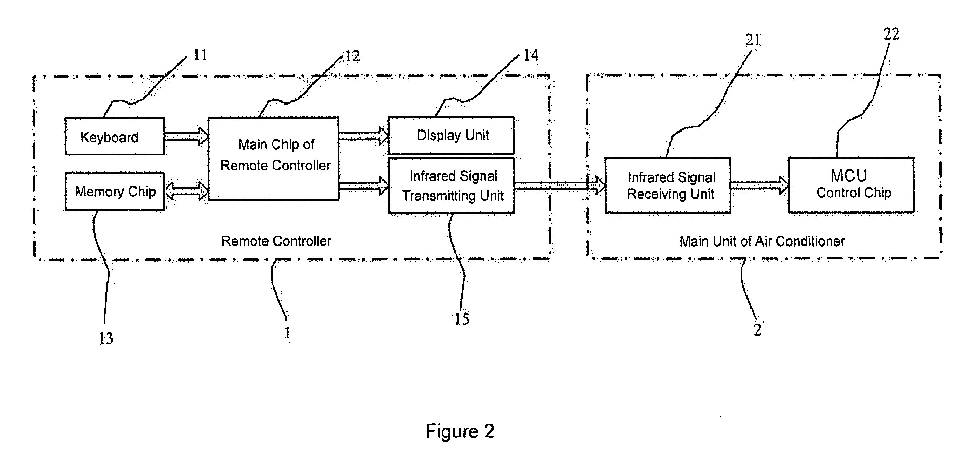

Figure 2 is a modular diagram of the air conditioner with function of user-defined curve according to the present invention; the air conditioner comprises a main unit 2 and a remote controller 1.

The main unit 2 comprises: a receiving unit 21 of user-defined curve for receiving the data of the user-defined curve set by the user, the corresponding relation between time and the air conditioner temperature demanded by the user is defined by the user-defined curve; and a control unit 22 connected to the receiving unit 21 of user-defined curve for controlling air conditioner temperature at different times according to the user-defined curve.

The user sets the user-defined curve by means of the remote controller 1. The remote controller 1 comprises a keyboard 11 for inputting temperature and time data of the user-defined curve; a main chip 12 of remote controller for receiving the temperature and time data inputted by the user to generate the data of the user-defined curve and transmitting the data of the user-defined curve respectively to a memory chip 13, a display unit 14 and a transmitting unit 15; a memory chip 13 for storing the data of the user-defined curve; a display unit 14 for displaying the data inputted by the user and the user-defined curve according to the data of the user-defined curve transmitted by the main chip 12 of remote controller; and a transmitting unit 15 for transmitting the data of the user-defined curve transmitted from the main chip 12 of remote controller to the receiving unit 21 of user-defined curve of the main unit 2.

The control unit 22 of the main unit is the air conditioner MCU control chip, the data of the user-defined curve are stored in a built-in RAM of the air conditioner MCU control chip, and the control unit 22 automatically calls the data of the user-defined curve according to the user's settings.

The main unit 2 of air conditioner may be connected to a computer, then the user can set the user-defined curve on the computer, the data of the user-defined curve are transmitted by the computer to the receiving unit 21 of the user-defined curve of the main unit 2 of air conditioner so as to make the air conditioner operate according to the user-defined curve.

First Embodiment (wherein the user-defined sleep curve is set by the staged timing remote controller):

In user-defined mode, the user can change the setting temperature defined by the sleep temperature curve, the time interval being not changeable, until the default maximum sleep time of the remote controller is met. The operation is detailed as follows:

Press sleep button on the remote controller of air conditioner for the modes of "common sleep", "intelligent sleep", "user-defined sleep" and "cancel sleep" in order. When common sleep is selected, the air conditioner enters the sleep mode defined by prior art remote controller; when intelligent sleep is selected, the air conditioner enters the operation according to the sleep curve pre-stored in the remote controller; when user-defined sleep is selected, the air conditioner enters the operation according to the user-defined sleep temperature curve.

In common sleep mode, the main unit of air conditioner operates in prior common sleep mode which is provided for the continuity of use of prior sleep mode for the user.

In intelligent sleep mode, the sleep curve accustomed by investigating and sampling among a majority of people is stored in the control system so that the user is able to select the operation according to the sleep curve.

In user-defined sleep mode, the user-defined sleep curve can be called directly to operate. If the "setting" button is pressed repeatedly for 3 times within 2 seconds, the remote controller will enter user-defined setting status. Then, "one hour later" is displayed for the timing time on the remote controller, at this time, the display section "88" for setting temperature displays the temperature set last time as defined by the sleep curve and flickers.

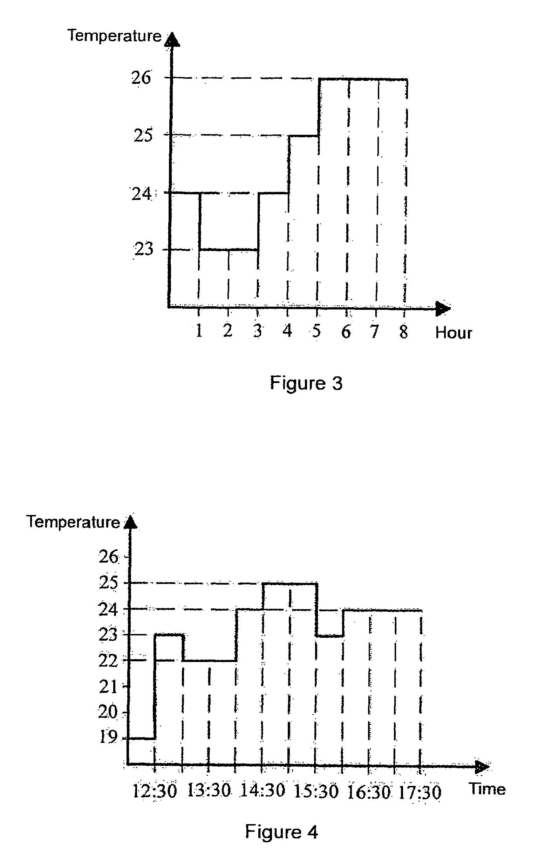

At first, adjust the displayed temperature with "+" and "-" to change the corresponding setting temperature (for example, the temperature is set as 23 degrees in Figure 3), when the adjustments are done, press "confirm" button to confirm; if there is no need to change temperature, just press "confirm" button directly.

At this time, 1 hour is automatically increased at the display section for the timing time of the remote controller and "two hours later" is displayed. The display section "88" for setting temperature displays the temperature set last time as defined by the sleep curve and flickers.

Repeat the above-mentioned two steps until the temperature setting for "8 hours later" is done, thereby a user-defined sleep curve is done. At this time, the remote controller restores to display the primary timing time and the primary setting temperature, at the same time, the user-defined sleep pattern is displayed.

In the process of the above-mentioned setting status, if none of the buttons is pressed continuously for 5 seconds, the remote controller will automatically quit the sleep curve setting status and restore to the primary display status. It also works to quit the sleep curve setting status by pressing the on-off button, the mode button or the sleep button to change the sleep mode during the process of setting.

The user is able to search the sleep curve set by the user by way of sleep curve setting; in user-defined sleep mode, it is able to search the user-defined sleep curve by pressing "setting" button directly.

By storing the set sleep curve in the remote controller, it is convenient for controlling a plurality of air conditioners by use of one remote controller. Having entered the user-defined sleep mode, the remote controller sends the temperature curve directly to the air conditioner.

The function of the user-defined sleep curve is realized as illustrated in Figure 2: at first, the user sets the user-defined sleep curve by means of the keyboard 11, while the user is doing the settings, the corresponding pattern and data are displayed synchronously by the display unit 14 of remote controller, after the settings are done, the set data of the user-defined curve are stored by the remote controller 1 in the built-in memory chip 13 of the remote controller, the memory chip 13 can be AT24C02A or other types of memory chips with similar functions, then the data of the user-defined curve are transmitted in coding format to the infrared signal receiving unit 21 of the air conditioner by the infrared signal transmitting unit 15, then the data of the user-defined sleep curve are stored in the built-in RAM of the air conditioner MCU control chip 22 by the infrared signal receiving unit 21, then the MCU control chip 22 sets the predetermined setting temperature during the corresponding period of time according to the user-defined sleep curve in RAM and controls the air conditioner to operate accordingly by evaluating the difference between the setting temperature and room temperature. When the settings of user-defined sleep curve are done, if the user does not want to change the settings of the user-defined sleep curve, the data of the user-defined sleep curve in the memory chip 13 can be directly called and transmitted to the main unit 2 of air conditioner by the infrared signal transmitting unit 15, upon receiving the user-defined sleep curve set by the remote controller 1, the main unit 2 of air conditioner works at the setting temperature in the corresponding time according to the user-defined sleep curve.

Second Embodiment (wherein the user-defined temperature-time curve is set by the time timing remote controller):

The settings of the user-defined curve of remote controller are not limited to function settings in the first embodiment; in the user-defined sleep curve mode, the user is able to set the temperature-time curve at will according to personal preference and call or change the curve at any time. The operation is detailed as follows:

In user-defined curve mode, if the "setting" button is pressed repeatedly for 3 times within 2 seconds, the remote controller will enter user-defined setting status, at this time, the timing time section on the remote controller displays the time set last time as defined by the curve and flickers.

At first, adjust "+" and "-" buttons in cooperation with operations on the timing button, the corresponding setting time (such as 12.30 in Figure 4) and operation time (such as the half hour between 12.30 and 13.00 in Figure 4) can be changed, this time can be any time within 24 hours, after the settings are done, press "confirm" button to confirm.

At this time, the display section "88" of remote controller for setting temperature displays the temperature set last time as defined by the curve and flickers, the corresponding setting temperature can be changed by adjusting "+" and "-" buttons, when the adjustments are done, press "confirm" button to confirm.

The timing time section on the remote controller displays the time set last time as defined by the curve and flickers.

Repeat the above-mentioned two steps until the user finishes the settings for demanded time and temperature, press "setting" button so that a temperature-time curve is set. At this time, the remote controller restores to display the primary timing time and the primary setting temperature, at the same time, the user-defined curve pattern is displayed.

In the process of the above-mentioned setting status, if none of the buttons is pressed continuously for 5 seconds, the remote controller will automatically quit the user-defined curve setting status and restore to primary display status. It also works to quit the user-defined curve setting status by pressing on-off button during the process of setting.

The user is able to search or modify the curve set by the user by way of the user-defined curve setting; in user-defined curve mode, press "setting" button directly to start curve search, then each time when pressing the "setting" button, a group of data are displayed at the time display section or temperature display section and start to flicker, if the user is not satisfied with any one of the time or temperature, he can adjust "+" and "-" buttons or in cooperation with operations on the timing button to make modification, then press "confirm" button to confirm and save data.

Each time when entering the user-defined curve mode, the remote controller sends the curve of temperate data as a function of time to the air conditioner, the set user-defined curve is stored in the remote controller so that it is convenient for controlling a plurality of air conditioners by use of one remote controller.

The function of the user-defined temperature-time curve is realized as illustrated in Figure 2: at first, the user sets the user-defined curve by means of the keyboard 11, while the user is doing the settings the corresponding pattern and data are displayed synchronously by the display unit 14 of remote controller, after the settings are done, the set data of the user-defined temperature-time curve are stored by the remote controller 1 in the built-in memory chip 13 of the remote controller, the memory chip 13 can be AT24C02A or other types of memory chips with similar functions, then the data of the user-defined temperature-time curve are transmitted in a certain coding format to the infrared signal receiving unit 21 of air conditioner by the infrared signal transmitting unit 15, then the data of the user-defined curve are stored in the built-in RAM of the air conditioner MCU control chip 22 by the infrared signal receiving unit 21, then the MCU control chip 22 sets the predetermined setting temperature during the corresponding period of time according to the user-defined curve in RAM and controls the air conditioner to operate accordingly by evaluating the difference between the setting temperature and room temperature. When the settings of user-defined curve are done, if the user does not want to change the settings of the user-defined curve, the data of the user-defined curve in the memory chip 13 can be directly called and transmitted to the main unit 2 of air conditioner by the infrared signal transmitting unit 15, upon receiving the user-defined temperature-time curve set by the remote controller 1, the main unit 2 of air conditioner works at the setting temperature in the corresponding time according to the user-defined curve.

Third Embodiment (wherein the user-defined operation mode is set by the clock counting remote controller):

The present invention is not limited to the above-mentioned function settings, in the user-defined mode, the user is able to set within 24 hours one day variable instructions including turning on/off, changing operation mode, setting temperature or wind speed of the indoor unit of the air conditioner, etc. The operation is detailed as follows:

In user-defined mode, if the "setting" button is pressed repeatedly for 3 times within 2 seconds, the remote controller will enter user-defined setting status, at this time, the remote controller displays the parameter values set last time and flickers.

At first, adjust "+" and "-" buttons in cooperation with operations on the timing button, the corresponding starting time and operation time can be changed, this time can be any time within 24 hours, after the settings are done, press "confirm" button to confirm.

At this time, the corresponding sections for on-off, mode, temperature and wind speed on the remote controller flicker in turn, it is able to press "confirm" button for confirmation to skip or press related buttons to adjust functions, when all adjustments are done, press "confirm" button to confirm.

Repeat the above-mentioned two steps until the settings for 24 hours are done by the user, press "confirm" button so that the function table is set. At this time, the remote controller restores to display the primary timing time and the primary setting temperature, at the same time, the air conditioner enters the automatic setting operation status.

In the process of the above-mentioned setting status, if none of the buttons is pressed continuously for 5 seconds, the remote controller will automatically quit the user-defined setting status and restore to primary display status. It also works to quit the user-defined setting status by pressing on-off button in the process of setting.

The user is able to search or modify the parameters by way of the user-defined setting; in user-defined mode, press "setting" button directly to start search, then each time when pressing the "setting" button, a group of parameters of setting time are displayed and flicker, if there is no need for the user to change, he can skip it by directly pressing confirm button, or modify functions by use of corresponding function buttons and press "confirm" to confirm and save data.

The function of the user-defined mode is realized as illustrated in Figure 2: at first, the user sets the user-defined operation parameter curve by means of the keyboard 11, while the user is doing the settings the pattern and data corresponding to each parameter are displayed synchronously by the display unit 14 of remote controller, after the settings are done, the set data of the user-defined operation parameter curve are stored by the remote controller 1 in the built-in memory chip 13 of the remote controller, the memory chip 13 can be AT24C02A or other types of memory chips with similar functions, then the data of the user-defined operation parameter curve are transmitted in coding format to the infrared signal receiving unit 21 of air conditioner by the infrared signal transmitting unit 15, then the data of the user-defined operation parameter curve are stored in the built-in RAM of the air conditioner MCU control chip 22 by the infrared signal receiving unit 21, then the MCU control chip 22 sets the predetermined operation parameter during the corresponding period of time according to the user-defined operation parameter curve in RAM and controls the air conditioner to operate accordingly by each parameter. When the settings of user-defined operation parameter curve are done, if the user does not want to change the settings of the user-defined operation parameter curve, the data of the user-defined operation parameter curve in the memory chip 13 can be directly called and transmitted to the main unit 2 of air conditioner by the infrared signal transmitting unit 15, upon receiving the user-defined operation parameter curve set by the remote controller 1, the main unit 2 of air conditioner works according to the parameters set by the user-defined operation parameter curve.

Each time the user enters the user-defined mode, the set parameters are sent to the air conditioner by the remote controller, and then the air conditioner starts to operate according to the user-defined mode.

The above descriptions and illustrations should not be construed as limiting the scope of the present invention, which is defined by the appended claims.

## Claims

1. A method of controlling an air conditioner to operate according to a user-defined curve, said air conditioner comprises a main unit and a remote controller, **characterized in that**, said method comprises the following steps:
the user-defined curve is set by use of the keyboard on said remote controller;
when the settings are done, the set data of the user-defined curve are stored by said remote controller in the built-in memory chip of the remote controller;
the data of the user-defined curve are transmitted in coding format to an infrared signal receiving unit of the main unit of air conditioner by an infrared signal transmitting unit of the remote controller;
the data of the user-defined curve are stored in a built-in RAM of a MCU control chip of the main unit of air conditioner by the infrared signal receiving unit of the main unit of air conditioner, then predetermined operation parameters are set during the corresponding period of time by the MCU control chip according to the data of the user-defined curve in the RAM, and the main unit of air conditioner is controlled to operate accordingly by said operation parameters;
said user-defined curve is a user-defined sleep curve, said remote controller has staged timing function wherein the time interval is not changeable, the process of setting said user-defined sleep temperature curve further comprises the following steps:
the user enters the user-defined setting status;
then the user sets a first setting temperature, said remote controller maintains at the first setting temperature during the first time interval;
if there is no need for the user to change the setting temperature, he can directly confirm, said remote controller maintains at the first setting temperature during the second time interval; if there is need for the user to change the setting temperature, the setting temperature can be adjusted to the demanded second setting temperature so that said remote controller maintains at the second setting temperature during the second time interval;
keep on doing so until completing the temperature settings for the whole period of sleep time thereby said user-defined sleep temperature curve is done.

2. A method of controlling an air conditioner to operate according to a user-defined curve, said air conditioner comprises a main unit and a remote controller, **characterized in that**, said method comprises the following steps:
the user-defined curve is set by use of the keyboard on said remote controller;
when the settings are done, the set data of the user-defined curve are stored by said remote controller in the built-in memory chip of the remote controller;
the data of the user-defined curve are transmitted in coding format to an infrared signal receiving unit of the main unit of air conditioner by an infrared signal transmitting unit of the remote controller;
the data of the user-defined curve are stored in a built-in RAM of a MCU control chip of the main unit of air conditioner by the infrared signal receiving unit of the main unit of air conditioner, then predetermined operation parameters are set during the corresponding period of time by the MCU control chip according to the data of the user-defined curve in the RAM, and the main unit of air conditioner is controlled to operate accordingly by said operation parameters;
said user-defined curve is a user-defined sleep temperature curve, said remote controller has staged timing function wherein the time interval is not changeable, the process of setting said user-defined sleep temperature curve further comprises the following steps:
the user enters the user-defined setting status;
the remote controller displays the temperature set last time as defined by the sleep temperature curve during the first one hour time interval, if there is no need for the user to change the temperature, he can directly confirm, then the remote controller will maintain the temperature within the time interval; if the user changes the setting temperature, he can adjust the temperature to the demanded first setting temperature, then the remote controller will maintain the first setting temperature within the time interval;
next, the remote controller automatically increases one hour and displays the temperature set last time as defined by the sleep temperature curve during the second one hour time interval, if there is no need for the user to change the temperature, he can directly confirm, then the remote controller will maintain the temperature within the second one hour time interval; if the user changes the setting temperature, he can adjust the temperature to the demanded second setting temperature, then the remote controller will maintain the second setting temperature within the second one hour time interval;
repeat the above-mentioned temperature setting steps until completing the temperature settings for the whole period of sleep time thereby said user-defined sleep temperature curve is done.

3. The method according to claim 1 or 2, **characterized in that**, said time interval is a constant time interval preset inside said remote controller.

4. The method according to claim 1 or 2, **characterized in that**, the step of adjusting setting temperature is achieved by operating "+" and "-" buttons on said remote controller.

5. The method according to claim1 or 2, **characterized in that**, in the process of setting said user-defined sleep temperature curve, if none of the buttons is pressed within preset time, or an on-off button on the remote controller is pressed, or a mode button on the remote controller is pressed, the air conditioner will automatically quit the user-defined sleep temperature curve setting status.

6. The method according to claim 1 or 2, **characterized in that**, in the process of setting said sleep temperature curve, press the sleep button on the remote controller to quit the user-defined sleep temperature curve setting status so that the sleep mode is changed.

7. The method according to claim 1 or 2, **characterized in that**, in said user-defined sleep mode, press "setting" button directly, the main chip of remote controller calls the data of the user-defined sleep temperature curve from said memory chip and transmits the data to the display unit of remote controller, then said user-defined sleep temperature curve is displayed by said display unit so as to search the user-defined sleep curve.

8. A method of controlling an air conditioner to operate according to a user-defined curve, said air conditioner comprises a main unit and a remote controller, **characterized in that**, said method comprises the following steps:
the user-defined curve is set by use of the keyboard on said remote controller;
when the settings are done, the set data of the user-defined curve are stored by said remote controller in the built-in memory chip of the remote controller;
the data of the user-defined curve are transmitted in coding format to an infrared signal receiving unit of the main unit of air conditioner by an infrared signal transmitting unit of the remote controller;
the data of the user-defined curve are stored in a built-in RAM of a MCU control chip of the main unit of air conditioner by the infrared signal receiving unit of the main unit of air conditioner, then predetermined operation parameters are set during the corresponding period of time by the MCU control chip according to the data of the user-defined curve in the RAM, and the main unit of air conditioner is controlled to operate accordingly by said operation parameters;
said user-defined curve is a user defined temperature-time curve, said remote controller has time timing function, the process of setting said user-defined temperature-time curve further comprises the following steps:
the user enters the user-defined temperature setting mode to activate the user-defined curve setting status;
set the starting time and operation time for entering user-defined curve operation status;
set the setting temperature corresponding to the operation time so that the setting of one temperature point is done;
by repeatedly setting of temperature points, said user-defined temperature-time curve is set;
enter the user-defined temperature-time operation mode.

9. The method according to claim 8, **characterized in that**, said starting time can be any time within 24 hours.

10. The method according to claim 8, **characterized in that**, the step of adjusting setting time is achieved by operating "+" and "-" buttons on said remote controller in cooperation with operations on the timing button.

11. The method according to claim 8, **characterized in that**, in the process of setting said user-defined curve, if none of the buttons is pressed within preset time or an on-off button on the remote controller is pressed, or a mode button on the remote controller is pressed, the air conditioner will automatically quit the user-defined temperature-time curve setting status.

12. The method according to claim 8, **characterized in that**, in said user-defined temperature-time operation mode, press "setting" button directly, the main chip of remote controller calls the data of the user-defined temperature-time curve from said memory chip and transmits the data to the display unit of remote controller, then said user-defined temperature-time curve is displayed by said display unit so as to search and modify the user-defined temperature-time curve.

13. The method according to claim 8, **characterized in that**, said user-defined curve comprises a user-defined mode curve, said remote controller has clock counting function, the process of setting user-defined mode curve further comprises the following steps:
the user enters the user-defined setting status to set the starting time and operation time of the user-defined mode;
set the operation function parameters of air conditioner corresponding to each operation time, and said function parameters include on-off, mode, temperature and/or wind speed.

14. The method according to claim 13, **characterized in that**, repeat the above-mentioned two steps until the settings for 24 hours are done by the user, thereby automatic operation status of the air conditioner is set.

15. The method according to claim 13, **characterized in that**, the starting time and operation time of said user-defined mode are set by operating "+" and "-" buttons in cooperation with operations on the timing button.

16. An air conditioner operating according to a user-defined curve, said air conditioner comprises a main unit (2) and a remote controller (1), **characterized in that**, said air conditioner is controlled by the method according to claim 1, 2 or 8.

## Patentansprüche

1. Verfahren zum Steuern einer Klimaanlage, so dass diese entsprechend einer benutzerdefinierten Kurve arbeitet, wobei die Klimaanlage eine Haupteinheit und eine Fernsteuervorrichtung enthält, **dadurch gekennzeichnet, dass** das Verfahren die folgenden Schritte enthält:
die benutzerdefinierte Kurve wird unter Verwendung der Tastatur der Fernsteuervorrichtung eingestellt;
wenn die Einstellungen vorgenommen sind, werden die Einstelldaten der benutzerdefinierten Kurve mittels der Fernsteuervorrichtung in dem eingebauten Speicherchip der Fernsteuervorrichtung gespeichert;
die Daten der benutzerdefinierten Kurve werden im Kodierungsformat zu einer Infrarotsignalempfangseinheit der Haupteinheit der Klimaanlage mittels einer Infrarotsignalsendeeinheit der Fernsteuervorrichtung übermittelt;
die Daten der benutzerdefinierten Kurve werden in einem eingebauten RAM eines MCU-Steuerchips der Haupteinheit der Klimaanlage mittels der lnfrarotsignalempfangseinheit der Haupteinheit der Klimaanlage gespeichert, woraufhin vorgegebene Betriebsparameter während der entsprechenden Zeitperiode mittels des MCU-Steuerchips gemäß den Daten der benutzerdefinierten Kurve im RAM eingestellt werden, wobei die Haupteinheit der Klimaanlage mittels der Betriebsparameter so gesteuert wird, dass sie dementsprechend arbeitet;
die benutzerdefinierte Kurve ist eine benutzerdefinierte Schlaftemperaturkurve, wobei die Fernsteuervorrichtung eine abgestufte Zeitsteuerfunktion aufweist, wobei das Zeitintervall nicht änderbar ist, und wobei der Prozess des Einstellens der benutzerdefinierten Schlaftemperaturkurve ferner die folgenden Schritte enthält:
der Benutzer wechselt in den Status zur benutzerdefinierten Einstellung;
anschließend stellt der Benutzer eine erste Einstelltemperatur ein, wobei die Fernsteuervorrichtung während des ersten Zeitintervalls bei der ersten Einstelltemperatur bleibt;
wenn für den Benutzer keine Notwendigkeit besteht, die Einstelltemperatur zu ändern, kann er direkt bestätigen, wobei die Fernsteuervorrichtung während des zweiten Zeitintervalls bei der ersten Einstelltemperatur bleibt;
wenn für den Benutzer die Notwendigkeit besteht, die Einstelltemperatur zu ändern, kann die Einstelltemperatur an die geforderte zweite Einstelltemperatur angepasst werden, so dass die Fernsteuervorrichtung während des zweiten Zeitintervalls bei der zweiten Einstelltemperatur bleibt;
dies wird fortgesetzt, bis die Temperatureinstellungen für die gesamte Schlafzeitperiode abgeschlossen sind, wobei die benutzerdefinierte Schlaftemperaturkurve fertiggestellt wird.

2. Verfahren zum Steuern einer Klimaanlage, so dass diese entsprechend einer benutzerdefinierten Kurve arbeitet, wobei die Klimaanlage eine Haupteinheit und eine Fernsteuervorrichtung enthält, **dadurch gekennzeichnet, dass** das Verfahren die folgenden Schritte enthält:
die benutzerdefinierte Kurve wird unter Verwendung der Tastatur der Fernsteuervorrichtung eingestellt;
wenn die Einstellungen vorgenommen sind, werden die Einstelldaten der benutzerdefinierten Kurve mittels der Fernsteuervorrichtung in dem eingebauten Speicherchip der Fernsteuervorrichtung gespeichert;
die Daten der benutzerdefinierten Kurve werden im Kodierungsformat zu einer Infrarotsignalempfangseinheit der Haupteinheit der Klimaanlage mittels einer Infrarotsignalsendeeinheit der Fernsteuervorrichtung übermittelt;
die Daten der benutzerdefinierten Kurve werden in einem eingebauten RAM eines MCU-Steuerchips der Haupteinheit der Klimaanlage mittels der Infrarotsignalempfangseinheit der Haupteinheit der Klimaanlage gespeichert, woraufhin vorgegebene Betriebsparameter während der entsprechenden Zeitperiode mittels des MCU-Steuerchips gemäß den Daten der benutzerdefinierten Kurve im RAM eingestellt werden, wobei die Haupteinheit der Klimaanlage mittels der Betriebsparameter so gesteuert wird, dass sie dementsprechend arbeitet;
die benutzerdefinierte Kurve ist eine benutzerdefinierte Schlaftemperaturkurve, wobei die Fernsteuervorrichtung eine abgestufte Zeitsteuerfunktion aufweist, wobei das Zeitintervall nicht änderbar ist, und wobei der Prozess des Einstellens der benutzerdefinierten Schlaftemperaturkurve ferner die folgenden Schritte enthält:
der Benutzer wechselt in den Status zur benutzerdefinierten Einstellung;
die Fernsteuervorrichtung zeigt die Temperatur, die beim letzten Mal wie durch die Schlaftemperaturkurve definiert eingestellt worden ist, während des ersten Ein-Stunden-Zeitintervalls an, wobei der Benutzer dann, wenn keine Notwendigkeit besteht, dass er die Temperatur ändert, direkt bestätigen kann, woraufhin die Fernsteuervorrichtung innerhalb des Zeitintervalls die Temperatur halten wird; wenn der Benutzer die Einstelltemperatur ändert, kann er die Temperatur an die geforderte erste Einstelltemperatur anpassen, woraufhin die Fernsteuervorrichtung innerhalb des Zeitintervalls die erste Einstelltemperatur halten wird;
als Nächstes rückt die Fernsteuervorrichtung automatisch eine Stunde vor und zeigt die Temperatur, die beim letzten Mal wie durch die Schlaftemperaturkurve definiert eingestellt worden ist, während des zweiten Ein-Stunden-Zeitintervalls an, wobei der Benutzer dann, wenn keine Notwendigkeit besteht, dass er die Temperatur ändert, direkt bestätigen kann, woraufhin die Fernsteuervorrichtung die Temperatur innerhalb des zweiten Ein-Stunden-Zeitintervalls die Temperatur halten wird; wenn der Benutzer die Einstelltemperatur ändert, kann er die Temperatur an die geförderte zweite Einstelltemperatur anpassen, woraufhin die Fernsteuervorrichtung innerhalb des zweiten Ein-Stunden-Zeitintervalls die zweite Einstelltemperatur halten wird;
Wiederholten der oben erwähnten Temperatureinstellschritte, bis die Temperatureinstellungen für die gesamte Schlafzeitperiode abgeschlossen sind, wobei die benutzerdefinierte Schlaftemperaturkurve fertiggestellt wird.

3. Verfahren nach Anspruch 1 oder 2, **dadurch gekennzeichnet, dass** das Zeitintervall ein konstantes Zeitintervall ist, das innerhalb der Fernsteuervorrichtung voreingestellt ist.

4. Verfahren nach Anspruch 1 oder 2, **dadurch gekennzeichnet, dass** der Schritt des Anpassens der Einstelltemperatur durch Betätigen von Knöpfen "+" und "-"" auf der Fernsteuervorrichtung bewerkstelligt wird.

5. Verfahren nach Anspruch 1 oder 2, **dadurch gekennzeichnet, dass** in dem Prozess des Einstellens der benutzerdefinierten Schlaftemperaturkurve dann, wenn innerhalb einer voreingestellten Zeitspanne keiner der Knöpfe gedrückt wird oder ein Ein-Aus-Knopf der Fernsteuervorrichtung gedrückt wird oder ein Modus-Knopf auf der Fernsteuervorrichtung gedrückt wird, die Klimaanlage den Status zur Einstellung der benutzerdefinierten Schlaftemperaturkurve automatisch beendet.

6. Verfahren nach Anspruch 1 oder 2, **dadurch gekennzeichnet, dass** in dem Prozess Einstellens der Schlaftemperaturkurve der Schlafknopf auf der Fernsteuervorrichtung gedrückt wird, um der Status zur Einstellung der benutzerdefinierten Schlaftemperaturkurve zu beenden, so dass der Schlafmodus geändert wird.

7. Verfahren nach Anspruch 1 oder 2, **dadurch gekennzeichnet, dass** im benutzerdefinierten Schlafmodus der "Einstellung"-Knopf gedrückt wird, der Haupt-Chip der Fernsteuervorrichtung die Daten der benutzerdefinierten Schlaftemperaturkurve aus dem Speicherchip abruft und die Daten zu der Anzeigeeinheit der Fernsteuervorrichtung übermittelt, woraufhin die benutzerdefinierte Schlaftemperaturkurve von der Anzeigeeinheit angezeigt wird, um somit die benutzerdefinierte Schlafkurve zu prüfen.

8. Verfahren zum Steuern einer Klimaanlage, so dass diese entsprechend einer benutzerdefinierten Kurve arbeitet, wobei die Klimaanlage eine Haupteinheit und eine Fernsteuervorrichtung enthält, **dadurch gekennzeichnet, dass** das Verfahren die folgenden Schritte enthält:
die benutzerdefinierte Kurve wird unter Verwendung der Tastatur der Fernsteuervorrichtung eingestellt;
wenn die Einstellungen vorgenommen sind, werden die Einstelldaten der benutzerdefinierten Kurve mittels der Fernsteuervorrichtung in dem eingebauten Speicherchip der Fernsteuervorrichtung gespeichert;
die Daten der benutzerdefinierten Kurve werden im Kodierungsformat zu einer Infrarotsignalempfangseinheit der Haupteinheit der Klimaanlage mittels einer Infrarotsignalsendeeinheit der Fernsteuervorrichtung übermittelt;
die Daten der benutzerdefinierten Kurve werden in einem eingebauten RAM eines MCU-Steuerchips der Haupteinheit der Klimaanlage mittels der Infrarotsignalempfangseinheit der Haupteinheit der Klimaanlage gespeichert, woraufhin vorgegebene Betriebsparameter während der entsprechenden Zeitperiode mittels des MCU-Steuerchips gemäß den Daten der benutzerdefinierten Kurve im RAM eingestellt werden, wobei die Haupteinheit der Klimaanlage mittels der Betriebsparameter so gesteuert wird, dass sie dementsprechend arbeitet;
die Benutzerdefinierte Kurve ist eine benutzerdefinierte Temperatur-Zeit-Kurve, wobei die Fernsteuervorrichtung eine Zeitsteuerfunktion aufweist, und wobei der Prozess des Einstellens der benutzerdefinierten Temperatur-Zeit-Kurve ferner die folgenden Schritte enthält:
der Benutzer wechselt in den Modus zur Einstellung der benutzerdefinierten Temperatur, um den Status zur Einstellung der benutzerdefinierten Kurve zu aktivieren;
Einstellen des Starzeitpunkts und der Betriebszeit für das Eintreten in den Betriebsstatus mit benutzerdefinierter Kurve;
Einstellen der Einstelltemperatur entsprechend der Betriebszeit, sodass die Einstellung eines Temperaturpunkts bewerkstelligt wird;
durch wiederholtes Einstellen von Temperaturpunkten wird die benutzerdefinierte Temperatur-Zeit-Kurve eingestellt;
Wechseln in den benutzerdefinierten Temperatur-Zeit-Betriebsmodus.

9. Verfahren nach Anspruch 8, **dadurch gekennzeichnet, dass** der Startzeitpunkt ein beliebiger Zeitpunkt innerhalb von 24 Stunden sein kann.

10. Verfahren nach Anspruch 8, **dadurch gekennzeichnet, dass** der Schritt des Anpassens der Einstellzeit durch Betätigen der Knöpfe "+" und "-" auf der Fernsteuervorrichtung im Zusammenwirken mit Betätigungen des Zeiteinstellknopfes erreicht wird.

11. Verfahren nach Anspruch 8, **dadurch gekennzeichnet, dass** in dem Prozess des Einstellens der benutzerdefinierten Kurve dann, wenn keiner der Knöpfe innerhalb einer voreingestellten Zeitspanne gedrückt wird oder ein Ein-Aus-Knopf auf der Fernsteuervorrichtung gedrückt wird oder ein Modus-Knopf auf der Fernsteuervorrichtung gedrückt wird, die Klimaanlage den Status zur Einstellung der benutzerdefinierten Temperatur-Zeit-Kurve automatisch beendet.

12. Verfahren nach Anspruch 8, **dadurch gekennzeichnet, dass** das im benutzerdefinierten Temperatur-Zeit-Betriebsmodus der "Einstellung"-Knopf direkt gedrückt wird, der Haupt-Chip der Fernsteuervorrichtung die Daten der benutzerdefinierten Temperatur-Zeit-Kurve aus dem Speicherchip abruft und die Daten zu der Anzeigeeinheit der Fernsteuervorrichtung übermittelt, und anschließend die benutzerdefinierte Temperatur-Zeit-Kurve von der Anzeigeeinheit angezeigt wird, um somit die benutzerdefinierte Temperatur-Zeit-Kurve zu prüfen und zu modifizieren.

13. Verfahren nach Anspruch 8, **dadurch gekennzeichnet, dass** die benutzerdefinierte Kurve eine benutzerdefinierte Moduskurve umfasst, wobei die Fernsteuervorrichtung eine Taktzählfunktion aufweist, und wobei der Prozess des Einstellens der benutzerdefinierten Moduskurve ferner die folgenden Schritte enthält:
der Benutzer wechselt in den Status zur benutzerdefinierten Einstellung, um den Starzeitpunkt und die Betriebszeit des benutzerdefinierten Modus einzustellen;
Einstellen der Betriebsfunktionsparameter der Klimaanlage entsprechend der jeweiligen Betriebszeit, wobei die Funktionsparameter Ein-Aus, Modus, Temperatur und/oder Windgeschwindigkeit enthalten.

14. Verfahren nach Anspruch 13, **dadurch gekennzeichnet, dass** die oben erwähnten zwei Schritte wiederholt werden bis von dem Benutzer die Einstellungen für 24 Stunden durchgeführt worden sind, wodurch der automatische Betriebsstatus der Klimaanlage eingestellt wird.

15. Verfahren nach Anspruch 13, **dadurch gekennzeichnet, dass** der Starzeitpunkt und die Betriebszeit des benutzerdefinierten Modus eingestellt werden, durch betätigen der Knöpfe "+" und "-" im Zusammenwirken mit Betätigungen des Zeiteinstellknopfes.

16. Klimaanlage, die entsprechend einer benutzerdefinierten Kurve arbeitet, wobei die Klimaanlage eine Haupteinheit (2) und eine Fernsteuervorrichtung (1) enthält, **dadurch gekennzeichnet, dass** die Klimaanlage durch das Verfahren nach Anspruch 1, 2 oder 8 gesteuert wird.

## Revendications

1. Procédé de commande d'un climatiseur pour fonctionner selon une courbe définie par l'utilisateur, ledit climatiseur comprenant une unité principale et une télécommande, **caractérisé en ce que** ledit procédé comprend les étapes suivantes :
la courbe définie par l'utilisateur est réglée en utilisant le clavier de ladite télécommande ;
lorsque les réglages sont effectués, les données réglées de la courbe définie par l'utilisateur sont stockées par ladite télécommande dans la puce de mémoire intégrée de la télécommande ;
les données de la courbe définie par l'utilisateur sont transmises en format de codage à une unité de réception de signal infrarouge de l'unité principale du climatiseur par une unité de transmission de signal infrarouge de la télécommande ;
les données de la courbe définie par l'utilisateur sont stockées dans une mémoire RAM intégrée d'une puce de commande MCU de l'unité principale du climatiseur par l'unité de réception de signal infrarouge de l'unité principale du climatiseur, puis des paramètres de fonctionnement prédéterminés sont réglés au cours de la période de temps correspondante par la puce de commande MCU en fonction des données de la courbe définie par l'utilisateur dans la mémoire RAM, et l'unité principale du climatiseur est commandée pour fonctionner en conséquence par lesdits paramètres de fonctionnement ;
ladite courbe définie par l'utilisateur est une courbe de température de veille définie par l'utilisateur, ladite télécommande a une fonction de minuterie échelonnée dans laquelle l'intervalle de temps n'est pas changeable, le procédé de réglage de ladite courbe de température de veille définie par l'utilisateur comprenant en outre les étapes suivantes :
l'utilisateur entre dans le statut de réglage défini par l'utilisateur ;
puis l'utilisateur règle une première température de réglage, ladite télécommande maintient la première température de réglage pendant le premier intervalle de temps ;
si l'utilisateur n'a pas besoin de changer la température de réglage, il peut directement confirmer, ladite télécommande maintient la première température de réglage pendant le deuxième intervalle de temps ; si l'utilisateur a besoin de changer la température de réglage, la température de réglage peut être ajustée à la deuxième température de réglage demandée de sorte que ladite télécommande maintienne la deuxième température de réglage pendant le deuxième intervalle de temps ;
la répétition de ces étapes jusqu'à l'établissement des réglages de température pour toute la période de temps de veille afin d'achever ladite courbe de température de veille définie par l'utilisateur.

2. Procédé de commande d'un climatiseur pour fonctionner selon une courbe définie par l'utilisateur, ledit climatiseur comprenant une unité principale et une télécommande, **caractérisé en ce que** ledit procédé comprend les étapes suivantes :
la courbe définie par l'utilisateur est réglée en utilisant le clavier de ladite télécommande ;
lorsque les réglages sont effectués, les données réglées de la courbe définie par l'utilisateur sont stockées par ladite télécommande dans la puce de mémoire intégrée de la télécommande ;
les données de la courbe définie par l'utilisateur sont transmises en format de codage à une unité de réception de signal infrarouge de l'unité principale du climatiseur par une unité de transmission de signal infrarouge de la télécommande ;
les données de la courbe définie par l'utilisateur sont stockées dans une mémoire RAM intégrée d'une puce de commande MCU de l'unité principale du climatiseur par l'unité de réception de signal infrarouge de l'unité principale du climatiseur, puis des paramètres de fonctionnement prédéterminés sont réglés au cours de la période de temps correspondante par la puce de commande MCU en fonction des données de la courbe définie par l'utilisateur dans la mémoire RAM, et l'unité principale du climatiseur est commandée pour fonctionner en conséquence par lesdits paramètres de fonctionnement ;
ladite courbe définie par l'utilisateur est une courbe de température de veille définie par l'utilisateur, ladite télécommande a une fonction de minuterie échelonnée dans laquelle l'intervalle de temps n'est pas changeable, le procédé de réglage de ladite courbe de température de veille définie par l'utilisateur comprenant en outre les étapes suivantes :
l'utilisateur entre dans le statut de réglage défini par l'utilisateur ;
la télécommande affiche la température réglée la dernière fois telle que définie par la courbe de température de veille au cours du premier intervalle de temps d'une heure, si l'utilisateur n'a pas besoin de changer la température, il peut directement confirmer, puis la télécommande maintient la température dans l'intervalle de temps ; si l'utilisateur change la température de réglage, il peut ajuster la température à la première température de réglage demandée, puis la télécommande maintient la première température de réglage au cours de l'intervalle de temps ;
ensuite, la télécommande augmente automatiquement d'une heure et affiche la température réglée la dernière fois telle que définie par la courbe de température de veille au cours du deuxième intervalle de temps d'une heure, si l'utilisateur n'a pas besoin de changer la température, il peut directement confirmer, puis la télécommande maintient la température au cours du deuxième intervalle de temps d'une heure ; si l'utilisateur change la température de réglage, il peut ajuster la température à la deuxième température de réglage demandée, puis la télécommande maintient la deuxième température de réglage au cours du deuxième intervalle de temps d'une heure ;
la répétition des étapes de réglage de température susmentionnées jusqu'à l'établissement des réglages de température pour toute la période de temps de veille afin d'achever ladite courbe de température de veille définie par l'utilisateur.

3. Procédé selon la revendication 1 ou 2, **caractérisé en ce que** ledit intervalle de temps est un intervalle de temps constant préréglé à l'intérieur de ladite télécommande.

4. Procédé selon la revendication 1 ou 2, **caractérisé en ce que** l'étape d'ajustement de la température de réglage est réalisée en actionnant les boutons « + » et « - » de ladite télécommande.

5. Procédé selon la revendication 1 ou 2, **caractérisé en ce que**, dans le procédé de réglage de ladite courbe de température de veille définie par l'utilisateur, si aucun des boutons n'est pressé au cours du temps préréglé, ou si un bouton marche/arrêt de la télécommande est pressé, ou si un bouton de mode de la télécommande est pressé, le climatiseur quitte automatiquement le statut de réglage de courbe de température de veille définie par l'utilisateur.

6. Procédé selon la revendication 1 ou 2, **caractérisé par**, dans le procédé de réglage de ladite courbe de température de veille, la pression du bouton de veille de la télécommande pour quitter le statut de réglage de courbe de température de veille définie par l'utilisateur afin de changer le mode de veille.

7. Procédé selon la revendication 1 ou 2, **caractérisé par**, dans ledit mode de veille défini par l'utilisateur, la pression du bouton « réglage » directement, la puce principale de la télécommande appelle les données de la courbe de température de veille définie par l'utilisateur de ladite puce de mémoire et transmet les données à l'unité d'affichage de la télécommande, puis ladite courbe de température de veille définie par l'utilisateur est affichée par ladite unité d'affichage afin de chercher la courbe de veille définie par l'utilisateur.

8. Procédé de commande d'un climatiseur pour fonctionner selon une courbe définie par l'utilisateur, ledit climatiseur comprenant une unité principale et une télécommande, **caractérisé en ce que** ledit procédé comprend les étapes suivantes :
la courbe définie par l'utilisateur est réglée en utilisant le clavier de ladite télécommande ;
lorsque les réglages sont effectués, les données réglées de la courbe définie par l'utilisateur sont stockées par ladite télécommande dans la puce de mémoire intégrée de la télécommande ;
les données de la courbe définie par l'utilisateur sont transmises en format de codage à une unité de réception de signal infrarouge de l'unité principale du climatiseur par une unité de transmission de signal infrarouge de la télécommande ;
les données de la courbe définie par l'utilisateur sont stockées dans une mémoire RAM intégrée d'une puce de commande MCU de l'unité principale du climatiseur par l'unité de réception de signal infrarouge de l'unité principale du climatiseur, puis des paramètres de fonctionnement prédéterminés sont réglés au cours de la période de temps correspondante par la puce de commande MCU en fonction des données de la courbe définie par l'utilisateur dans la mémoire RAM, et l'unité principale du climatiseur est commandée pour fonctionner en conséquence par lesdits paramètres de fonctionnement ;
ladite courbe définie par l'utilisateur est une courbe de température-temps définie par l'utilisateur, ladite télécommande a une fonction de minuterie de temps, le procédé de réglage de ladite courbe de température-temps définie par l'utilisateur comprenant en outre les étapes suivantes :
l'utilisateur entre dans le mode de réglage de température définie par l'utilisateur pour activer le statut de réglage de courbe définie par l'utilisateur ;
le réglage de l'heure de début et du temps de fonctionnement pour entrer dans le statut de fonctionnement de courbe définie par l'utilisateur ;
le réglage de la température de réglage correspondant au temps de fonctionnement de manière à effectuer le réglage d'un point de température ;
le réglage à répétition de points de température pour régler ladite courbe température-temps définie par l'utilisateur ;
l'entrée dans le mode de fonctionnement température-temps définie par l'utilisateur.

9. Procédé selon la revendication 8, **caractérisé en ce que** ladite heure de début peut être n'importe quelle heure sur une plage de 24 heures.

10. Procédé selon la revendication 8, **caractérisé en ce que** l'étape de réglage de temps de réglage est réalisée en actionnant des boutons « + » et « - » sur ladite télécommande en coopération avec des opérations sur le bouton de minuterie.

11. Procédé selon la revendication 8, **caractérisé en ce que**, dans le procédé de réglage de ladite courbe définie par l'utilisateur, si aucun des boutons n'est pressé au cours du temps préréglé, ou si un bouton marche/arrêt de la télécommande est pressé, ou si un bouton de mode de la télécommande est pressé, le climatiseur quitte automatiquement le statut de réglage de courbe de température-temps définie par l'utilisateur.

12. Procédé selon la revendication 8, **caractérisé par**, dans ledit mode de fonctionnement température-temps défini par l'utilisateur, la pression du bouton « réglage » directement, la puce principale de la télécommande appelle les données de la courbe de température-temps définie par l'utilisateur de ladite puce de mémoire et transmet les données à l'unité d'affichage de la télécommande, puis ladite courbe de température-temps définie par l'utilisateur est affichée par ladite unité d'affichage afin de chercher et de modifier la courbe de température-temps définie par l'utilisateur.

13. Procédé selon la revendication 8, **caractérisé en ce que** ladite courbe définie par l'utilisateur comprend une courbe de mode défini par l'utilisateur, ladite télécommande comprend une fonction de comptage d'horloge, le procédé de réglage de la courbe de mode défini par l'utilisateur comprend en outre les étapes suivantes :
l'utilisateur entre dans le statut de réglage défini par l'utilisateur pour régler l'heure de début et le temps de fonctionnement du mode défini par l'utilisateur ;
le réglage des paramètres de fonction de fonctionnement du climatiseur correspondant à chaque temps de fonctionnement, et lesdits paramètres de fonction comprennent marche/arrêt, mode, température et/ou vitesse du vent.

14. Procédé selon la revendication 13, **caractérisé par** la répétition des deux étapes susmentionnées jusqu'à ce que les réglages pour 24 heures soient effectués par l'utilisateur afin de régler le statut de fonctionnement automatique du climatiseur.

15. Procédé selon la revendication 13, **caractérisé en ce que** l'heure de début et le temps de fonctionnement dudit mode défini par l'utilisateur sont réglés en actionnant les boutons « + » et « - » en coopération avec des opérations sur le bouton de minuterie.

16. Climatiseur fonctionnant selon une courbe définie par l'utilisateur, ledit climatiseur comprenant une unité principale (2) et une télécommande (1), **caractérisé en ce que** ledit climatiseur est commandé par le procédé selon la revendication 1, 2 ou 8.
